# FASCICULE DE BREVET EUROPEEN

(11) **EP 0 444 999 B1**
(45) Date de publication et mention de la délivrance du brevet: **02.06.1999**
(21) Numéro de dépôt: 91400458.5
(22) Date de dépôt: 20.02.1991
(51) Int. Cl.: H04N 1/32

(54) **Télécopieur à appel manuel**
Fernkopiergerät mit manuellem Anruf
Telecopier with manual calling

(30) Priorité: 27.02.1990 FR 9002401
(43) Date de publication de la demande: 04.09.1991
(73) Titulaire: SOCIETE D'APPLICATIONS GENERALES D'ELECTRICITE ET DE MECANIQUE S A G E M, F-75783 Paris Cedex 16 (FR)
(72) Inventeur: Charbonnier, Philippe, F-78600 Maisons Lafitte (FR)
(74) Mandataire: Bloch, Gérard

(56) Documents cités:
- GB-A- 2 169 174
- US-A- 4 663 778
- US-A- 4 677 660
- US-A- 4 833 705

## Description

L'invention a trait à un télécopieur ordinaire à appel manuel.

Un télécopieur ordinaire est connecté, d'une part, à une ligne,téléphonique et, d'autre part, à au moins un poste téléphonique associé. Il comprend, notamment, un processeur central, un module d'analyse de données, une imprimante, un modem, un bloc de commutation de la ligne téléphonique soit sur le poste associé soit sur le modem, un indicateur d'appel entrant, un détecteur de courant, en série avec le poste associé, une touche de lancement de la fonction télécopie et un générateur de signal de décroché.

L'utilisation d'un tel télécopieur est simple. L'usager place dans le télécopieur "appelant" un document à télécopier, décroche le combiné du poste téléphonique associé, compose, sur le cadran ou le clavier du poste, le numéro d'un télécopieur "appelé", suit l'acheminement de l'appel et la sonnerie du télécopieur appelé, entend l'appelé qui décroche et l'émission de son signal de décroché, généralement un signal de fréquence de 2100 Hz, et appuie sur la touche de lancement de télécopie pour commuter la ligne téléphonique sur le modem et lancer le protocole télécopie.

Avec un télécopieur à appel manuel, l'usager doit attendre que la communication soit établie, reconnaître l'établissement de la communication et décider finalement lui-même de lancer ou non le protocole télécopie. C'est une procédure longue et pas toujours très fiable.

La présente invention vise à perfectionner les télécopieurs à appel manuel pour pouvoir libérer leurs usagers dès que les numéros d'appel ont été composés.

A cet effet, l'invention conceme un télécopieur à appel manuel du type mentionné ci-dessus, caractérisé comme dans la revendication 1.

Grâce à l'invention, l'usager, après qu'il ait placé un document sur le télécopieur, décroché le combiné du poste associé, composé le numéro d'appel et appuyé sur la touche de lancement de télécopie, n'a plus rien à faire pour assurer, dans des conditions fiables et rapides, la transmission de la télécopie.

Plus précisément, le télécopieur appelé, en détectant le signal d'appel du télécopieur appelant, généralement un signal haché de fréquence de 1100 Hz, reconnait l'appel d'un télécopieur, émet un signal de décroché qui est détecté par le télécopieur appelant et le protocole télécopie est lancé, la touche de lancement ayant été actionnée.

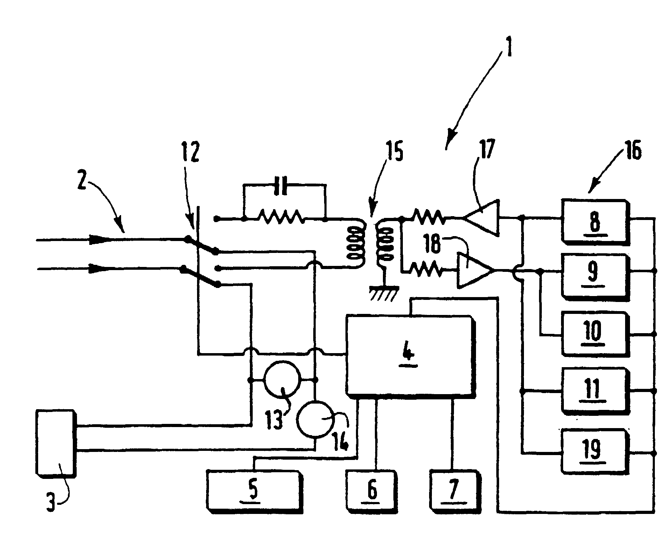

L'invention sera mieux comprise à l'aide de la description suivante de la forme de réalisation préférée du télécopieur, en référence à la figure unique en annexe qui représente une vue synoptique du télécopieur.

Le télécopieur 1 de la figure est connecté à une ligne téléphonique 2 et à un poste téléphonique 3. Il comporte un processeur central 4 relié à un module d'analyse de données, ou scanner, 5, à une imprimante 6 et à un circuit d'émission-réception 16. Le processeur 4 est également associé à une touche 7 de lancement télécopie.

Le groupe d'émission-réception 16 est branché aux bomes de l'enroulement secondaire d'un transformateur 15 et comporte un modulateur 8, un générateur 19 de signal de décroché de fréquence 2100 Hz, un démodulateur 9, un détecteur 10 de signal de décroché de fréquence 2100 Hz, et un générateur 11 de signal d'appel de fréquence 1100 Hz. Le modulateur 8 et les générateurs 11 et 19, d'une part, et le démodulateur 9 et le détecteur 10, d'autre part, sont montés en parallèle entre l'enroulement secondaire 15 et le processeur 4 par l'intermédiaire de deux amplificateurs 17, 18, respectivement.

La ligne téléphonique 2 pénètre dans le télécopieur 1 et peut être dirigée soit vers le circuit 16 soit vers le poste téléphonique 3 par un commutateur 12 commandé par le processeur 4. Un indicateur d'appel, ou détecteur de sonnerie, 13 est branché en parallèle sur le poste téléphonique 3 et un détecteur de courant 14, permettant de déterminer si le poste est en ligne ou au repos, est connecté en série avec le poste, entre celui-ci et l'indicateur 13. L'indicateur 13 comporte essentiellement un photocoupleur associé à des moyens, dans le processeur 4, d'appréciation des paramètres du signal, comme par exemple sa fréquence. Le détecteur 14 comporte essentiellement une paire de photocoupleurs associés à d'autres moyens dans le processeur 4 permettant de déterminer si le combiné du poste téléphonique 3 est décroché ou non.

S'agissant d'un télécopieur ordinaire, il ne sera pas décrit plus en détail.

A l'état de repos, le commutateur 12 est dans ia position qui connecte la ligne 2 au poste téléphonique 3. A partir de l'état de repos, le poste peut être en ligne et inhiber la fonction télécopie ou, alternativement, le télécopieur peut prendre la ligne.

Plus précisément, l'usager, après qu'il ait placé un document sur le télécopieur pour qu'il soit analysé par le scanner 5, décroche le combiné du poste 3, numérote le numéro du télécopieur destiné à recevoir la télécopie et actionne la touche 7. Il n'a ensuite plus rien à faire. L'actionnement de la touche 7 commute la ligne 2 sur le circuit 16 et provoque l'émission en ligne, par le générateur 11, du signal d'appel à 1100 Hz. Le télécopieur appelé reconnait l'appel d'un télécopieur, décroche et émet en ligne et à son tour un signal de décroché à 2100 Hz. Ce signal est détecté par le détecteur 10, ce qui lance le protocole télécopie. Le détecteur 10 peut comporter une batterie de filtres et le détecteur 10 et le générateur 11 peuvent être programmables. On peut prévoir que si le télécopieur, après avoir émis le signal d'appel téléphonie ne détecte pas de signal de décroché au bout d'une période de durée déterminée, ici environ 45 s, il raccroche en le signalant.

## Revendications

1. Télécopieur à appel manuel, connecté, d'une part, à une ligne téléphonique (2) et, d'autre part, à un poste téléphonique associé (3), et comprenant un processeur central (4), un module d'analyse de données (5), une imprimante (6), un modem (8, 9), un bloc (12) de commutation de la ligne téléphonique (2) soit sur le poste associé (3) soit sur le modem (8, 9), un indicateur (13) d'appel entrant, un détecteur (14) de courant, en série avec le poste associé (3), une touche (7) de lancement de la fonction télécopie et un générateur (19) de signal de décroché, télécopieur caractérisé par le fait qu'il comporte un générateur de signal d'appel télécopie (11) et un détecteur (10) de signal de décroché pour commander le lancement du protocole télécopie et la touche (7) de lancement de télécopie est agencée pour autoriser le lancement du protocole télécopie, mais lancé après détection d'un signal de décroché par le détecteur (10) de signal de décroché, le signal de décroché etant émis par le generateur du signal de decroché du télécopieur appelé.

2. Télécopieur à appel manuel selon la revendication 1, dans lequel le générateur de signal d'appel (11) est agencé pour émettre un signal d'appel après la numérotation sur le poste associé (3) d'un numéro d'appel et actionnement de la touche de lancement (7).

## Claims

1. Facsimile machine with manual calling, connected on the one hand to a telephone line (2) and, on the other hand, to an associated telephone set (3), and comprising a central processor (4), a data analysis module (5), a printer (6) and a modem (8, 9), a unit (12) for switching the telephone line (2) either to the associated set (3) or to the modem (8, 9), an indicator (13) for incoming calls, a current detector (14), connected in series with the associated set (3), a key (7) for starting up the facsimile function and an off-the-hook signal generator (19), facsimile machine characterised by the fact that it comprises a facsimile call signal generator (11) and an off-the-hook signal detector (10) for commanding the starting up of the facsimile protocol and the key (7) for starting up the facsimile is arranged to authorise the starting up of the facsimile protocol, but started after the detection of an off-the-hook signal by the off-the-hook signal detector (10), the off-the-hook signal being transmitted by the off-the-hook signal generator in the called facsimile machine.

2. Facsimile machine with manual calling according to claim 1, in which the call signal generator (11) is arranged to transmit a call signal after the dialling on the associated set (3) of a call number and the actuation of the starting up key (7).

## Patentansprüche

1. Fernkopierer mit handbetätigtem Ruf, der einerseits an eine Fernsprechleitung (2) und andererseits an ein zugeordnetes Fernsprechgerät (3) angeschlossen ist und der folgendes aufweist: einen zentralen Prozessor (4), ein Datenanalysemodul (5), einen Drucker (6), einen Modem (8, 9), einen Block (12) zum Umschalten der Fernsprechleitung (2) entweder auf das zugeordnete Gerät (3) oder auf den Modem (8, 9), eine Anzeige (13) für ankommende Rufe, einen Stromdetektor (14), der mit dem zugeordneten Gerät (3) in Reihe geschaltet ist, eine Taste (7) zum Starten der Fernkopiefunktion und einen Kennungssignal-Generator (19),
dadurch gekennzeichnet,
daß er einen Fernkopierufsignal-Generator (11) und einen Kennungssignal-Detektor (10) aufweisc, um den Start des Fernkopieprotokolls zu steuern,
und daß die Taste (7) zum Starten der Fernkopie dazu ausgebildet ist, den Start des Fernkopieprotokolls freizugeben, das jedoch nach Erfassung eines Kennungssignals durch den Kennunungssignal-Detektor (10) gestartet wird, wobei das Kennungssignal von dem Kennungssignal-Generator des angerufenen Fernkopierers gesendet wird.

2. Fernkopierer mit handbetätigtem Ruf nach Anspruch 1, bei dem der Rufsignal-Generator (11) dazu ausgebildet ist, nach der Wahl einer Rufnummer mit dem zugeordneten Gerät (3) und der Betätigung der Starttaste (7) ein Rufsignal zu senden.
